# EUROPEAN PATENT SPECIFICATION

(11) **EP 2 891 593 B1**
(45) Date of publication and mention of the grant of the patent: **14.02.2018**
(21) Application number: 13833445.3
(22) Date of filing: 29.08.2013
(51) Int. Cl.: B62J 1/12, B62K 19/46, B62J 9/00, B62K 11/10

(54) **VEHICLE SEAT PERIPHERAL STRUCTURE**
RANDSTRUKTUR FÜR FAHRZEUGSITZ
STRUCTURE PÉRIPHÉRIQUE DE SIÈGE DE VÉHICULE

(30) Priority: 31.08.2012 JP 2012191967
(43) Date of publication of application: 08.07.2015
(73) Proprietor: Honda Motor Co., Ltd., Minato-ku Tokyo 107-8556 (JP); Nifco Inc., Kanagawa 239-8560 (JP)
(72) Inventor: KAWATANI, Takeshi, Wako-shi Saitama 351-0193 (JP); IGARASHI, Toshio, Wako-shi Saitama 351-0193 (JP); TAKIKAWA, Yuki, Yokosuka-shi Kanagawa 239-8650 (JP)
(74) Representative: Dr. Gassner & Partner mbB
(86) International application number: PCT/JP2013/005118
(87) International publication number: WO 2014/034125

(56) References cited:
- EP-A1- 2 036 804
- EP-A1- 2 431 263
- EP-A2- 1 557 348
- CN-U- 201 472 522
- CN-U- 201 484 550
- CN-Y- 201 427 620
- JP-A- 2008 179 341
- JP-A- 2009 067 285
- JP-A- 2012 062 029

## Description

### Field of Technology

The present invention relates to a vehicle seat peripheral structure, and is applied to, for example, a seat for a motorcycle.

### Background Art

In a motorcycle, there is known a seat arrangement structure wherein a storage box with an upper opening is provided at a vehicle body center, and which supports a seat on which a driver sits above the storage box turnably relative to the storage box and to open and close the storage box by the seat. In such a seat arrangement structure, there is a seat arrangement structure provided with a piston damper whose one end is connected to a vehicle body frame and whose other end is connected to the seat so that the piston damper extends and contracts according to a turning of the seat (for example, Patent Document 1). In such seat arrangement structure, the turning of the seat is buffered by the piston damper so as to easily avoid an insertion of an article between the storage box and the seat, and to provide a high-grade feel to a product. Document EP1557348 discloses a vehicle seat peripheral structure according to the preamble of claim 1.

### Prior Art Document

### Patent Document

Patent Document 1: Japanese Patent No. 4318798

### Summary of the Invention

### Problems to be Solved by the Invention

In the seat arrangement structure according to the Patent Document 1, however, a resistance force of the piston damper acts on both an opening operation and a closing operation of the seat so as to increase a required force when the seat is opened and to make a user feel troublesome.

The present invention is made in view of the aforementioned backgrounds, and an object of the present invention is to provide a vehicle seat peripheral structure which switches the presence or absence of a damper action according to a turning direction of the seat.

### Means for Solving the Problems

In order to obtain the aforementioned object, the present invention is a vehicle seat peripheral structure (4) including a storage box (41) attached to a vehicle body (2); a seat (42) turnably attached to a front end of the storage box through hinges (66 and 73), and opening and closing the storage box; and a damper device (83) interposed between the storage box and the seat. The damper device includes a cylinder (84); a piston (85) slidably received inside the cylinder; a piston rod (86) whose one end is connected to the piston, and the other end protrudes from the cylinder; and an urging member (89) urging in a direction in which the piston rod protrudes from the cylinder. One of either the cylinder or the piston rod is turnably supported by an axis on one of either the storage box or the seat around a predetermined damper rotational axis line, and the other of either the cylinder or the piston rod forms a free end (93), and can slidingly contact with a load receiving portion (55) provided in the other of either the storage box or the seat.

According to the structure, when the seat is opened relative to the storage box, a resistance force of the damper device is not applied to the seat. The damper device has one end which is the free end, so that when the seat is opened, the damper device is not pulled by the seat and the storage box, so that the resistance force does not exert on the seat.

In the aforementioned invention, it is preferable that the load receiving portion includes a receiving concave portion (61) in which the free end of the damper device loosely fits.

According to the structure, the free end of the damper device abuts against a wall portion of the receiving concave portion so as to control a moving range, so that an operation of the damper device is stabilized.

In the aforementioned invention, the free end may slidingly contact with the load receiving portion when an angle relative to the storage box of the seat is provided within a predetermined angle range.

According to the structure, when the angle relative to the storage box of the seat is provided within the predetermined angle range, the damper device can provide a buffer action.

In the aforementioned invention, the free end may be formed approximately in a semispherical shape.

According to the structure, the free end can slidingly contact with the load receiving portion smoothly.

In the aforementioned invention, there may be included a male-side case (87) receiving the cylinder, and connected to the cylinder; and a female-side case (88) connected to the other end of the piston rod, and receiving the male-side case to proceed and recede. One of either the cylinder or the piston rod may be turnably supported by an axis on one of either the storage box or the seat through the connected male-side case or female-side case, and the free end may be formed in the male-side case or female-side case connected to the other of either the cylinder or the piston rod.

According to the structure, the cylinder and the piston rod are concealed by the male-side case and the female-side case from an outside. Also, a foreign matter is prevented from biting into a gap between the cylinder and the piston rod.

In the aforementioned invention, the storage box forms a box shape opening upward and including a bottom wall (44) and a side wall (45) standing around the bottom wall, and the load receiving portion may be a concave portion (61) provided in the side wall (46) disposed on a front side of the storage box.

According to the structure, the load receiving portion which controls the moving range of the free end can be easily formed.

In the aforementioned invention, it is preferable that the concave portion is provided at a center in a vehicle width direction of the side wall (46) and near the hinges.

According to the structure, the damper device can be shortened in an axis line direction so as to be made compact.

In the aforementioned invention, the vehicle body may be a scooter type motorcycle including a right-and-left pair of vehicle body frames (14) respectively extending to the front and back and where the storage box is disposed therebetween; and a suspension unit (25) whose upper portion is attached to at least one of mutually facing inside faces of the pair of vehicle body frames, and which suspends a rear wheel.

### Effect of the Invention

According to the aforementioned structures, in the vehicle seat peripheral structure, the presence or absence of a damper action can be switched according to a turning direction of the seat.

### Brief Description of the Drawings

Fig. 1 is a schematic side view showing a motorcycle to which a vehicle seat peripheral structure is applied according to an embodiment.
Fig. 2 is a plan view showing a frame structure of the motorcycle.
Fig. 3 is a side view showing the vehicle seat peripheral structure according to the embodiment.
Fig. 4 is a perspective view showing an open state of the vehicle seat peripheral structure according to the embodiment.
Fig. 5 is a perspective view showing an open state of essential parts of the vehicle seat peripheral structure according to the embodiment.
Fig. 6 is a perspective view showing a damper device of the vehicle seat peripheral structure according to the embodiment.
Fig. 7 is a cross-sectional view showing the damper device of the vehicle seat peripheral structure according to the embodiment.
Fig. 8 is a cross-sectional view showing a closed state of the essential parts of the vehicle seat peripheral structure according to the embodiment.
Fig. 9 is a cross-sectional view showing the open state of the essential parts of the vehicle seat peripheral structure according to the embodiment.

### Best Modes of Carrying out the Invention

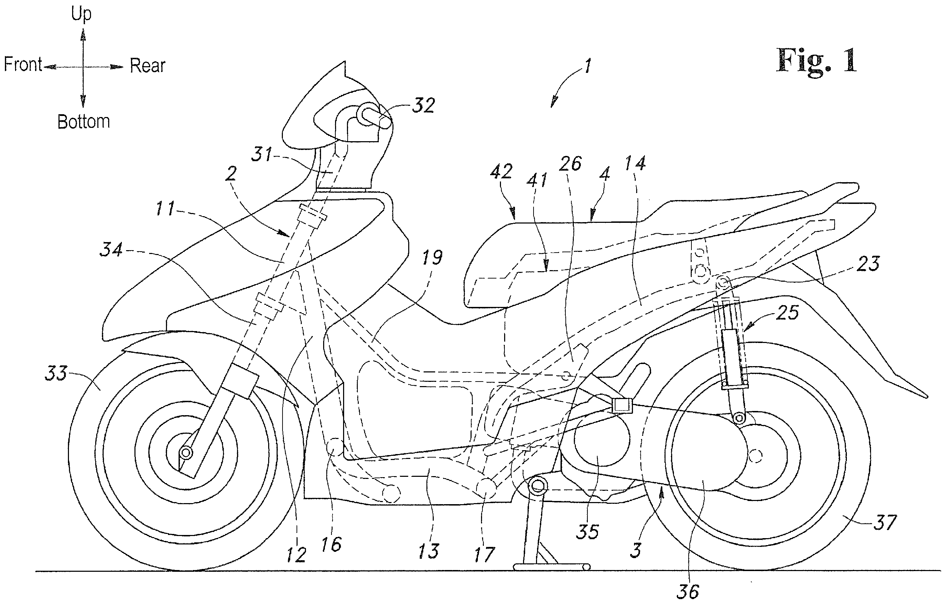

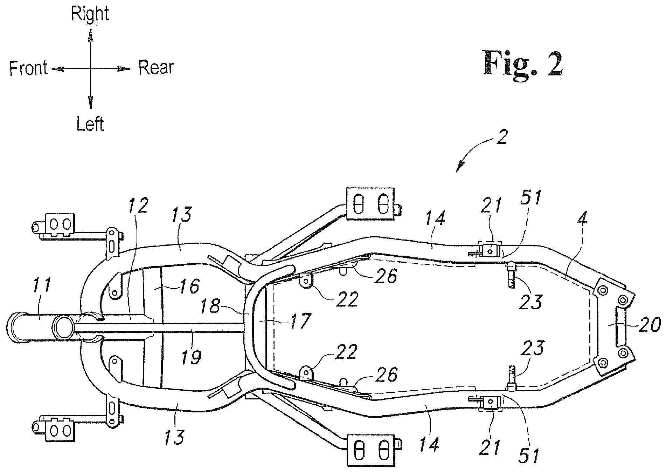

Hereinafter, with reference to the drawings, embodiments wherein the present invention is applied to a motorcycle will be explained in detail. In the following explanation, each direction is determined such that a forward-movement direction of the motorcycle is a front (see Fig. 1 and Fig. 2).

As shown in Fig. 1, a motorcycle 1 is a unit-swing-type scooter type vehicle, and includes a vehicle body frame 2; a power unit 3 supported in the vehicle body frame 2 to move up and down; and a seat device 4 supported in the vehicle body frame 2.

As shown in Fig. 1 and Fig. 2, the vehicle body frame 2 includes a head pipe 11 extending up and down at a front end portion of a vehicle; a main frame 12 extending backward and downward while inclining from an intermediate portion in an up-and-down direction of the head pipe 11; a right-and-left pair of lower frames 13 respectively bending and extending backward after protruding to a left side or a right side from a lower portion in the up-and-down direction of the main frame 12; a right-and-left pair of rear frames 14 protruding upward from a back end portion of each lower frame 13, and then inclining and extending backward and upward up to a back portion of the vehicle; a first cross frame 16 extending to the left side and the right side from a lower end portion of the main frame 12 and connected to the right and left lower frames 13 at a left end and a right end; a second cross frame 17 bridging between back end portions of the right and left lower frames 13; a third cross frame 18 bridging between intermediate portions of the right and left rear frames 14, and curved in such a way that an intermediate portion in a longitudinal direction protrudes forward; and a center pipe 19 extending backward from an upper portion of the main frame 12 and connected to a center portion in a vehicle width direction of the third cross frame 18 at a back end.

Each back end portion of the right and left rear frames 14 is mutually connected by a connection member 20. The right and left rear frames 14 respectively include first brackets 21 projected upward at a back portion, and second brackets 22 projected inward in the vehicle width direction at a front portion. On the first brackets 21 and the second brackets 22, there is placed and fastened the seat device 4. Also, at portions located on rear sides more than the first brackets 21 of the right and left rear frames 14, and mutually facing (inside portions in the vehicle width direction), there are respectively provided suspension support portions 23. An upper end portion of a rear suspension unit 25 is fastened to the suspension support portions 23 by a bolt and the like. The rear suspension unit 25 includes an extendable shock absorber, and a spring urging the shock absorber in an extending direction. Also, in each rear frame 14, there is provided a pivot bracket 26 supporting the power unit 3.

In the head pipe 11, there is rotatably received a steering shaft 31. At an upper end portion of the steering shaft 31, there is provided a steering handle 32, and at a lower end portion, there is provided a front fork 34 supporting a front wheel 33 turnably.

The power unit 3 includes an engine 35; a transmission 36 connected to a crankshaft of the engine 35; and a back wheel 37 connected to a drive shaft of the transmission 36. The power unit 3 is turnably supported in the pivot bracket 26, and there is connected a lower end portion of the rear suspension unit 25 whose upper end portion is connected to the rear frame 14. Namely, the power unit 3 is suspended on the rear suspension unit 25 connected to the rear frame 14.

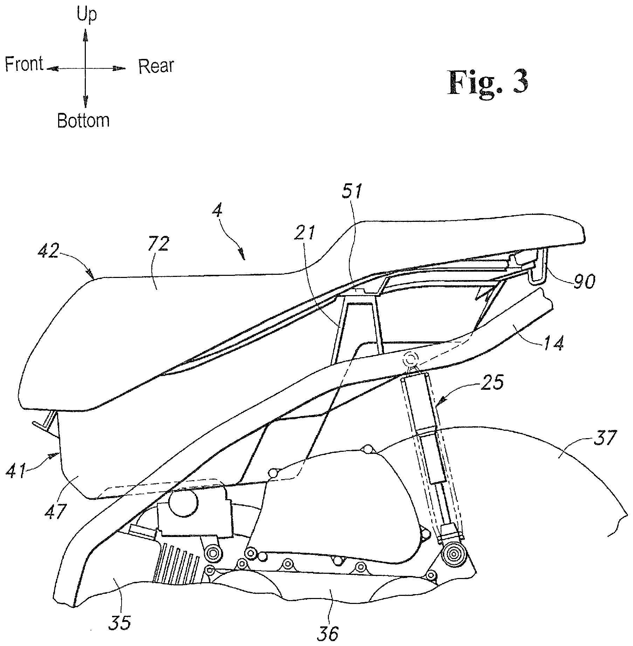

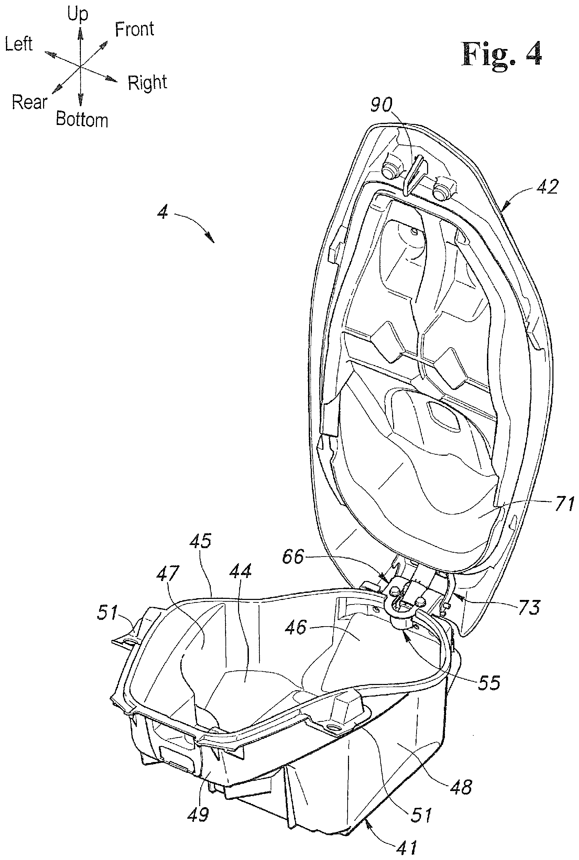

As shown in Fig. 3 and Fig. 4, the seat device 4 includes a storage box 41, and a seat 42 for a rider to sit on which also functions as a lid of the storage box 41. The storage box 41 includes a bottom wall 44, and a side wall 45 standing around the bottom wall 44, and has a box shape opening upward. The bottom wall 44 extends to front and back in such a way that a length in a front-back direction becomes longer than a length in a right-and-left direction. The bottom wall 44 is formed in such a way as to move upward as moving to a back side from a front side. The side wall 45 includes a front side wall 46 extending in the right-and-left direction along a front edge of the bottom wall 44; a left side wall 47 and a right side wall 48 extending to front and back along right and left side edges of the bottom wall 44 backward from both respective right and left ends of the front side wall 46; and a back side wall 49 extending in the right-and-left direction along a back edge of the bottom wall 44 in such a way as to link both back ends of the left side wall 47 and the right side wall 48. Upper edges of the left side wall 47 and the right side wall 48 are displaced upward as moving backward, and an upper edge of the back side wall 49 is disposed upward in an up-and-down direction more than an upper edge of the front side wall 46.

As shown in Figs. 2 to 4, on the upper edges of the left side wall 47 and the right side wall 48, there are provided attachment plates 51 protruding outside the right and left sides. The storage box 41 is disposed between the right and left rear frames 14, and a front portion of the bottom wall 44 is placed on the second brackets 22, and the right and left attachment plates 51 are placed on the first brackets 21. The right and left attachment plates 51 are fastened to the first brackets 21 by bolts and nuts, and the bottom wall 44 is fastened to the second brackets 22 by screws. Thus, the storage box 41 is attached to the vehicle body frame 2. In a state of being attached to the vehicle body frame 2, the storage box 41 is disposed above the rear suspension unit 25.

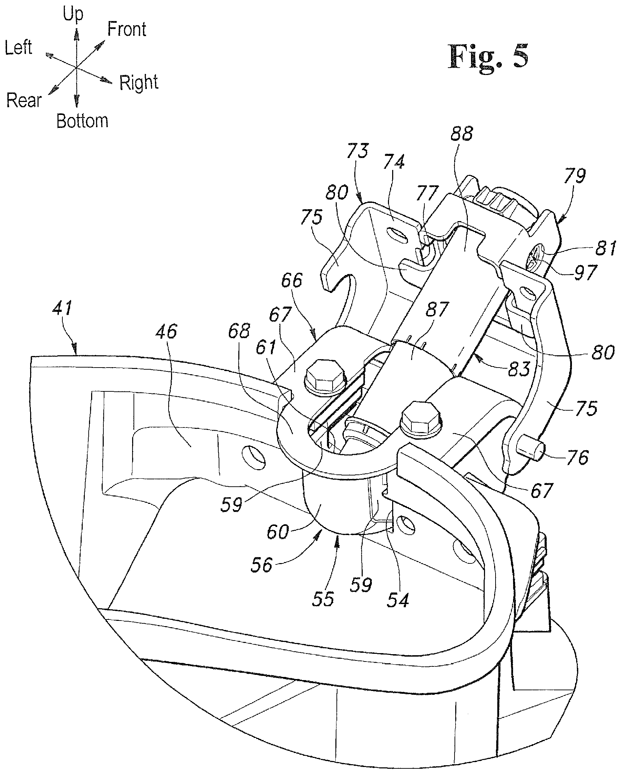

As shown in Fig. 5, the front side wall 46 is cut away downward from a center portion in the vehicle width direction of the upper edge approximately in a rectangular shape, and includes a notch portion 54 penetrating the front side wall 46 to front and back. In the notch portion 54, there is mounted a receiving member (a load receiving portion) 55. The receiving member 55 includes a main body portion 56 passing through the notch portion 54 to front and back; and a flange portion 57 protruding to right and left and downward from a front end of the main body portion 56, and caught on an edge portion on a front side of the notch portion 54. The main body portion 56 includes a right and left pair of guide walls 59 whose faces face in the right-and-left direction, and mutually face at a distance; and a center wall 60 extending along a back edge and a lower edge of the right and left pair of guide walls 59, and linking the right and left guide walls 59. The right and left pair of guide walls 59 and the center wall 60 open forward and upward, and define a receiving concave portion 61 concaved backward and downward all together. More specifically, the center wall 60 includes a first face 63 extending backward and downward from a front end; a second face 64 extending backward and upward from a back edge of the first face 63; and a third face 65 extending upward from a back edge of the second face 64, in a state wherein the receiving member 55 is mounted on the front side wall 46. The flange portion 57 extends along the right and left pair of guide walls 59 and a front edge of the center wall 60.

As shown in Fig. 5, on a front face of the front side wall 46 and at a peripheral edge of the notch portion 54, there is attached a first hinge bracket 66. The first hinge bracket 66 includes a right and left pair of first support walls 67 disposed on right and left lateral sides of the notch portion 54; and a connection plate 68 connecting the pair of first support walls 67. The first hinge bracket 66 is disposed such that a base end portion of each first support wall 67 sandwiches the flange portion 57 of the receiving member 55 from front and back between the base end portion of each first support wall 67 and the front side wall 46, and the first hinge bracket 66 is fastened to the front side wall 46 by bolts. At that time, the connection plate 68 is disposed above upper edges of the right and left guide walls 59 and the center wall 60 of the receiving member 55 in such a way as to sandwich the receiving member 55 from up and down between the connection plate 68 and an edge portion of the notch portion 54. Thus, by fastening the first hinge bracket 66 to the front side wall 46, the receiving member 55 is clamped between the first hinge bracket 66 and the front side wall 46. The right and left pair of first support walls 67 respectively protrudes forward, and mutually faces at a distance in the right-and-left direction. At a front portion of each first support wall 67, there is formed a hinge hole 69 mutually coaxial along a shaft line extending in the right-and-left direction.

As shown in Fig. 3, the seat 42 includes a plate-like seat base 71 formed to close an opening of the storage box 41; and a seat cushion 72 made of a flexible member connected to an upper face of the seat base 71. At a front end of a lower face of the seat base 71, there is connected a second hinge bracket 73 turnably supported in the first hinge bracket 66. The second hinge bracket 73 includes a fastening plate 74 fastened to the lower face of the seat base 71; a right and left pair of second support walls 75 risen from both right and left ends of the fastening plate 74; and hinge shafts 76 projected respectively at each second support wall 75 in such a way as to mutually become coaxial along a shaft line extending in the right-and-left direction. The second hinge bracket 73 is disposed such that each second support wall 75 faces outside the right and left sides of each first support wall 67, and each hinge shaft 76 is rotatably supported respectively in the hinge hole 69, so that the second hinge bracket 73 is rotatably supported in the first hinge bracket 66. Thereby, the seat 42 is turnably supported in the storage box 41 through a hinge formed by the first hinge bracket 66 and the second hinge bracket 73. The seat 42 can turn between a closed position closing the opening of the storage box 41 and an open position opening the opening of the storage box 41. In the seat 42, the open position is adjusted so that the seat 42 can stand by itself in the open position. In another embodiment, the seat 42 may be incapable of standing by itself in the open position, i.e., may move automatically to the closed position by its own weight of the seat 42. In the seat 42, a striker 90 projected at a back end of the lower face of the seat base 71 is selectively locked in a locking device (not shown in the figures) supported in the vehicle body frame 2 in the closed position, so that the seat 42 is maintained in the closed position.

At a center portion in the right-and-left direction of the fastening plate 74 of the second hinge bracket 73, there is formed a through hole 77 penetrating in a thickness direction, and the seat base 71 includes a concave portion 78 at a portion corresponding to the through hole 77. In the fastening plate 74, there is connected a damper support bracket 79 having approximately a square tube shape whose both ends are open. The damper support bracket 79 is arranged in such a way as to pass through the through hole 77 to enter into the concave portion 78 of the seat base 71, and in a connection piece 80 projected at an end portion, the damper support bracket 79 is connected to a peripheral edge of the through hole 77 of the damper support bracket 79. On mutually facing right and left side walls of the damper support bracket 79, there are respectively formed support holes 81 which mutually become coaxial along a shaft line extending in the right-and-left direction. In both the support holes 81, there is turnably supported a damper device 83.

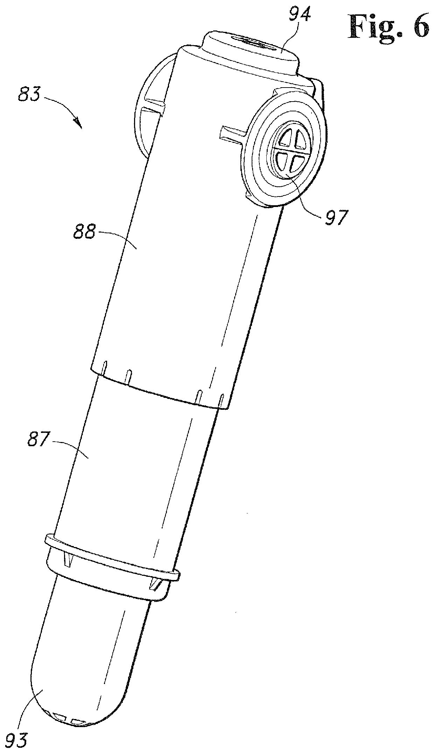

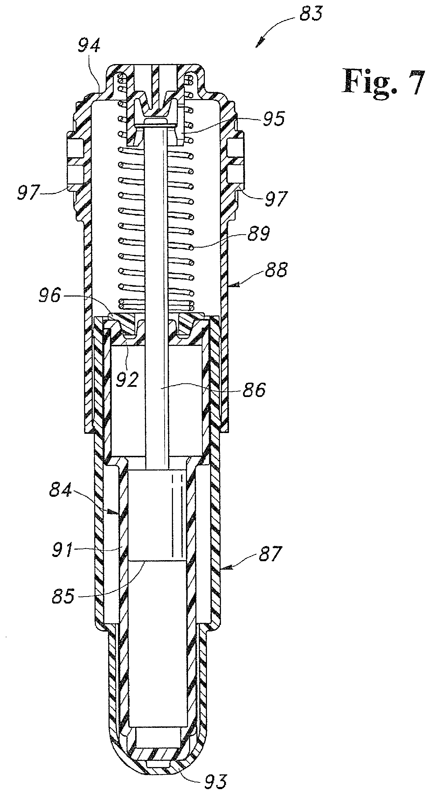

As shown in Fig. 6 and Fig. 7, the damper device 83 is made by using a known piston damper, and includes a cylinder 84; a piston 85; a piston rod 86; a male-side case 87; a female-side case 88; and an urging member 89. The cylinder 84 includes a cylinder portion 91 having a bottomed cylinder shape whose one end is open; and a sealing plate 92 closing the opening of the cylinder portion 91. The piston 85 is slidably received inside the cylinder 84, and defines the inside of the cylinder 84 into two chambers. Also, the piston 85 includes a thin hole (not shown in the figures) communicating the two chambers. In the piston rod 86, one end is connected to the piston 85, and the other end penetrates the sealing plate 92 to protrude outside the cylinder 84. In a space defined by the piston 85 inside the cylinder 84, there is held a fluid such as a viscous fluid, air, or the like. When the piston rod 86 proceeds and recedes, and the piston 85 moves inside the cylinder 84, the fluid passes through the thin hole, and a resistance associated with a movement of the fluid acts on the piston 85 and the piston rod 86.

The male-side case 87 has a bottomed cylinder shape whose one end is closed and other end is open, and receives the cylinder 84 inside to be integrally connected. In another embodiment, the male-side case 87 may be integrally formed as one portion of an outer face of the cylinder 84. An external shape of an end portion 93 on a side where the male-side case 87 is closed is formed approximately in a semispherical shape. The female-side case 88 has a bottomed cylinder shape whose one end is closed by a bottom plate 94 and other end is open. In the female-side case 88, there is received an opening end side of the male-side case 87, and a protruding end of the piston rod 86 is inserted into a cylindrical connection portion 95 projected on an inner face side of the bottom plate 94 of the female-side case 88 so as to be connected. Thereby, when the male-side case 87 proceeds and recedes relative to the female-side case 88, the piston rod 86 proceeds and recedes relative to the cylinder 84. In another embodiment, the female-side case 88 may be integrally formed as one portion of the piston rod 86. On an outer face of the sealing plate 92 of the cylinder 84, there is mounted a spring receiving seat 96, and the urging member 89 which is a compression coil spring is interposed between the spring receiving seat 96 and an inner face of the bottom plate 94 of the female-side case 88 in such a way as to surround the piston rod 86. Thereby, the male-side case 87 is urged in a direction of protruding relative to the female-side case 88. The spring receiving seat 96 may be integrally formed in the sealing plate 92. A maximum length of the damper device 83 is determined by the piston 85 abutting against the cylinder 84. At portions mutually opposing on side faces of the female-side case 88, there are projected support shafts 97 mutually becoming coaxial in a direction orthogonal to the piston rod 86.

In the damper device 83, the support shaft 97 of the female-side case 88 is rotatably supported in the support hole 81 of the damper support bracket 79. Thereby, the damper device 83 is turnably supported around a shaft line extending in the right-and-left direction relative to the seat 42. On an outer face of the female-side case 88, there is projected a stopper 99, and the stopper 99 collides with the damper support bracket 79, so that a rotational range around the support shaft 97 of the damper device 83 is controlled within a predetermined range. The male-side case 87 of the damper device 83 passes between the first support walls 67 of the first hinge bracket 66, and the end portion 93 becomes a free end to be received inside the receiving concave portion 61 of the receiving member 55.

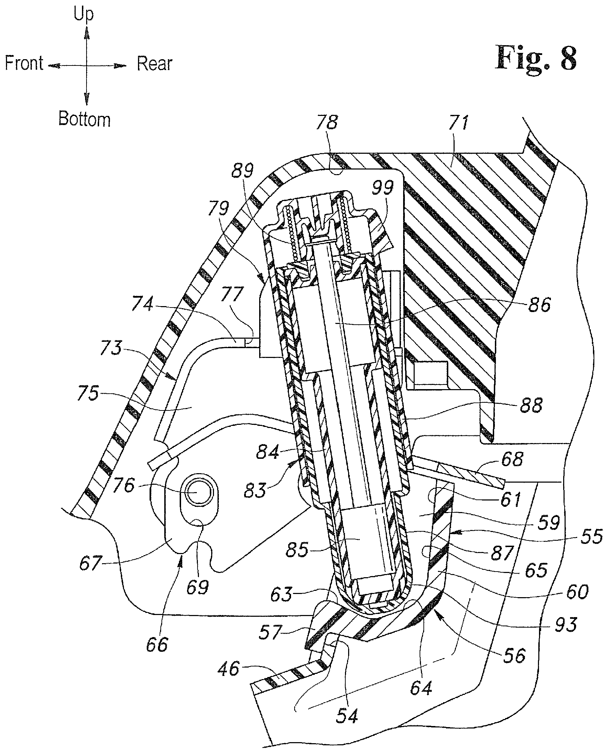

In the seat device 4 formed as above, as shown in Fig. 8, in a state wherein the striker 90 is not locked in the locking device, when the seat 42 is in the closed position, the damper device 83 is in a contracted form in which the end portion 93 of the male-side case 87 is pressed against the center wall 60 of the receiving member 55 so that the male-side case 87 is entered into the female-side case 88. At that time, the urging member 89 urges the male-side case 87 in the direction of protruding relative to the female-side case 88; however, the urging member 89 does not have an urging force moving the seat 42 in an open direction against a weight of the seat 42, and the damper device 83 is maintained in the contracted form.

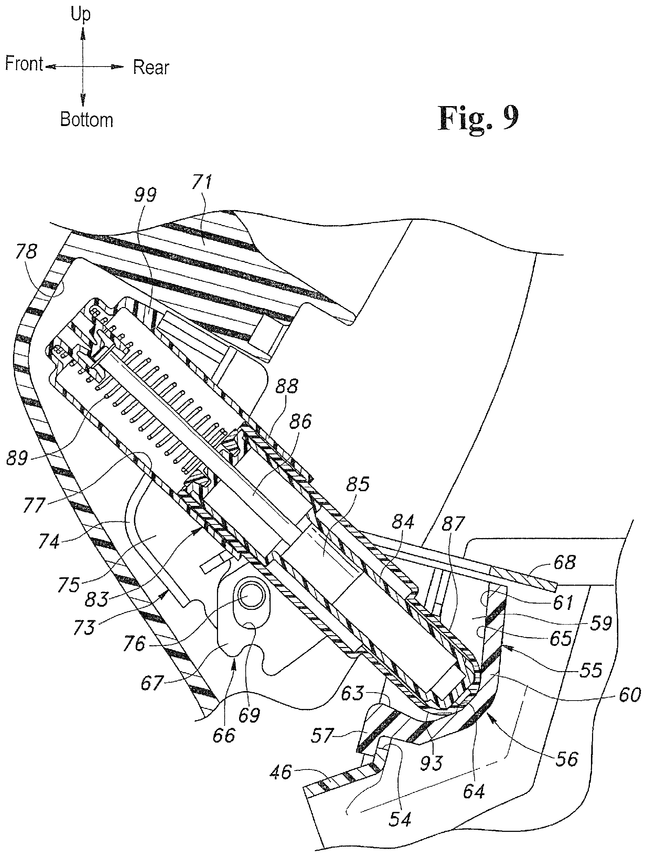

From that state, when a user moves the seat 42 in the open direction, as shown in Fig. 9, a distance between the support hole 81 of the damper support bracket 79 and the center wall 60 increases, and in the damper device 83, the male-side case 87 protrudes relative to the female-side case 88 by an urging force of the urging member 89. In the end portion 93 of the male-side case 87, a movement in the right-and-left direction is controlled by the right and left guide walls 59 of the receiving member 55, and the end portion 93 of the male-side case 87 slides back and forth, and up and down on the center wall 60. At that time, the male-side case 87 forms the free end, and is not connected to a member which is integrated with the storage box 41, so that the damper device 83 does not exert a resistance force (a buffer power) relative to a movement into the open position of the seat 42. Consequently, a user can move the seat 42 by a small amount of force without receiving the resistance force by the damper device 83. Also, when the seat 42 is further opened from a state shown in Fig. 9, the distance between the support hole 81 and the center wall 60 increases more than the maximum length of the damper device 83, and the end portion 93 of the damper device 83 is spaced from the center wall 60. Incidentally, even when the end portion 93 is spaced from the center wall 60, the end portion 93 is located inside the receiving concave portion 61.

When the seat 42 is moved in a closing direction from the open position, the seat 42 moves into the closed position by its own weight. Thereby, the distance between the support hole 81 and the center wall 60 becomes shorter than the maximum length of the damper device 83, and the end portion 93 of the damper device 83 abuts against the center wall 60. After that, the end portion 93 of the male-side case 87 of the damper device 83 is pressed while sliding on the center wall 60 of the receiving member 55, and the damper device 83 changes to the contracted form, and the piston 85 moves inside the cylinder 84 so as to buffer a movement of the seat 42. Thereby, a moving speed of the seat 42 becomes slow.

In the present embodiments, the end portion 93 which is one end of the damper device 83 is made as the free end, so that the damper device 83 does not provide the resistance force to the seat 42 within predetermined angle ranges when the seat 42 is opened and is closed from the open position. Also, the damper device 83 is formed such that the end portion 93 which is the free end of the damper device 83 slides relative to the center wall 60, so that a radial load is difficult to apply to the damper device 83, and the damper device 83 can smoothly extend and contract. Also, the receiving concave portion 61 is formed by the receiving member 55, and the free end of the damper device 83 is received in the receiving concave portion 61, so that the moving range of the free end is controlled, and the damper device 83 can smoothly extend and contract.

In the seat device 4, the damper device 83 is disposed outside the storage box 41 so as to prevent interference between the damper device 83 and an article housed in the storage box 41, user's hands, or the like. Also, the damper device 83 is disposed near a hinge portion (a rotational shaft) of the storage box 41 and the seat 42 so as to shorten a length of the damper device 83. Also, the damper device 83 is disposed between the storage box 41 and the seat 42, so that the seat device 4 can be combined beforehand to be unitized.

Specific embodiments have been explained in the above, and the present invention is not limited to the embodiments described hereinabove, and can be widely modified. For example, for the damper device 83, a known damper can be applied, and the damper may change a resistance force (a damping force) between a contracting direction and an extending direction. Also, the resistance force may change according to a speed of the piston 85 at times of contraction and extension.

Also, in the present embodiments, the damper device 83 is formed to be turnably supported relative to the seat 42 and to slidingly contact a loose end with a storage box 41 side; however, in another embodiment, the damper device 83 may be formed to be turnably supported relative to the storage box 41 and to slidingly contact the loose end with a seat 42 side. In that case, the receiving member 55 may be provided in the seat 42. Also, in the present embodiments, the receiving member 55 is formed to be connected to the storage box 41; however, in another embodiment, the receiving member 55 may be integrally formed with the front side wall 46 of the storage box 41.

### Explanation of Symbols

1 ... a motorcycle, 2 ... a vehicle body frame, 3 ... a power unit, 4 ... a seat device, 11 ... a head pipe, 12 ... a main frame, 13 ... a lower frame, 14 ... a rear frame, 21 ... a first bracket, 22 ... a second bracket, 23 ... a suspension support portion, 25 ... a rear suspension unit, 41 ... a storage box, 42 ... a seat, 44 ... a bottom wall, 45 ... a side wall, 46 ... a front side wall, 51 ... an attachment plate, 54 ... a notch portion, 55 ... a receiving member, 56 ... a main body portion, 57 ... a flange portion, 59 ... a guide wall, 60 ... a center wall, 61 ... a receiving concave portion, 63 ... a first face, 64 ... a second face, 65 ... a third face, 66 ... a first hinge bracket, 67 ... a first support wall, 68 ... a connection plate, 69 ... a hinge hole, 71 ... a seat base, 73 ... a second hinge bracket, 74 ... a fastening plate, 75 ... a second support wall, 76 ... a hinge shaft, 77 ... a through hole, 78 ... a concave portion, 79 ... a damper support bracket, 81 ... a support hole, 83 ... a damper device, 84 ... a cylinder, 85 ... a piston, 86 ... a piston rod, 87 ... a male-side case, 88 ... a female-side case, 89 ... an urging member, 93 ... an end portion (a free end), 97 ... a support shaft

## Claims

1. A vehicle seat peripheral structure, comprising:
a storage box (41) attachable to a vehicle body (2);
a seat (42) turnably attached to a front end of the storage box (41) through a hinge (66), and opening and closing the storage box (41); and
a damper device (83) interposed between the storage box (41) and the seat (42),
wherein the damper device (83) includes:
a cylinder (84);
a piston (85) slidably received inside the cylinder (84) ;
a piston rod (86) having one end connected to the piston (85), and another end protruding from the cylinder (84) ;
wherein one of either the cylinder (84) or the piston rod (86) is turnably supported by an axis on one of either the storage box (41) or the seat (42) around a predetermined damper rotational axis line, and
**characterized in that** the damper device (83) further includes:
an urging member (89) urging the piston rod (86) in a direction protruding from the cylinder (84),
and
wherein another of either the cylinder (84) or the piston rod (86) forms a free end (93), and slidingly contacts with a load receiving portion (55) provided in another of either the storage box (41) or the seat (42).

2. A vehicle seat peripheral structure according to claim 1, wherein the load receiving portion (55) includes a receiving concave portion (61) in which the free end (93) of the damper device (83) loosely fits.

3. A vehicle seat peripheral structure according to claim 1 or 2, wherein the free end (93) slidingly contacts with the load receiving portion (55) when an angle relative to the storage box (41) of the seat (42) is provided within a predetermined angle range.

4. A vehicle seat peripheral structure according to any one of claims 1 to 3, wherein the free end (93) is formed approximately in a semispherical shape.

5. A vehicle seat peripheral structure according to any one of claims 1 to 4, further comprising:
a male-side case (87) receiving the cylinder (84), and connected to the cylinder (84); and
a female-side case (88) connected to the another end of the piston rod (86), and receiving the male-side case (87) to proceed and recede,
wherein one of either the cylinder (84) or the piston rod (86) is turnably supported by an axis on one of either the storage box (41) or the seat (42) through the connected male-side case (87) or female-side case (88), and
the free end (93) is formed in the male-side case (87) or female-side case (88) connected to the another of either the cylinder (84) or the piston rod (86).

6. A vehicle seat peripheral structure according to any one of claims 1 to 5, wherein the storage box (41) includes a bottom wall (44) and a side wall (45) standing around the bottom wall (44) and forms a box shape opening upward and, and
the load receiving portion (55) is a concave portion (61) provided in the side wall (45) disposed on a front side of the storage box (41).

7. A vehicle seat peripheral structure according to claim 6, wherein the concave portion (61) is provided at a center in a vehicle width direction of the side wall (45) and near the hinge (66, 73).

8. Assembly comprising a vehicle body (2) of a scooter type motorcycle, a suspension unit (25) and a vehicle seat peripheral structure according to any one of the claims 1 to 7, the vehicle body (2) including a right-and-left pair of vehicle body frames (14) respectively extending to front and back, wherein the storage box (41) is disposed between the right-and-left pair of vehicle body frames (14); wherein an upper portion of the suspension unit (25) is attached at least to one of mutually facing inside faces of the pair of vehicle body frames (14), and suspending a rear wheel.

## Patentansprüche

1. Randstruktur für einen Fahrzeugsitz, Folgendes aufweisend:
einen an einer Fahrzeugkarosserie (2) anbringbaren Sitzbankkasten (41);
einen an einem vorderen Ende des Sitzbankkastens (41) durch ein Scharnier (66) drehbar befestigten und den Sitzbankkasten (41) öffnenden und schließenden Sitz (42); und
eine zwischen dem Sitzbankkasten (41) und dem Sitz (42) angeordnete Dämpfungsvorrichtung (83),
wobei die Dämpfungsvorrichtung (83) Folgendes aufweist:
einen Zylinder (84);
einen gleitend im Inneren des Zylinders (84) aufgenommenen Kolben (85);
eine Kolbenstange (86), bei der ein Ende mit dem Kolben (85) verbunden ist und das andere Ende von dem Zylinder (84) absteht;
wobei entweder der Zylinder (84) oder die Kolbenstange (86) um eine Achse entweder auf dem Sitzbankkasten (41) oder dem Sitz (42) um eine festgelegte Drehachse des Dämpfers drehbar gelagert ist,
**dadurch gekennzeichnet, dass** die Dämpfungsvorrichtung (83) ferner Folgendes aufweist:
ein Presselement (89), das die Kolbenstange (86) in eine von dem Zylinder (84) wegweisende Richtung drängt,
und wobei das jeweilige andere Bauteil des Zylinders (84) und der Kolbenstange (86) ein freies Ende (93) bildet, und gleitend mit einem Lastaufnahmeabschnitt (55) in Kontakt ist, der in dem jeweiligen anderen Bauteil des Sitzbankkastens (41) und dem Sitz (42) bereitgestellt ist.

2. Randstruktur für einen Fahrzeugsitz nach Anspruch 1, wobei der Lastaufnahmeabschnitt (55) einen konkaven Aufnahmeabschnitt (61) aufweist, in den das freie Ende (93) der Dämpfungsvorrichtung (83) lose hineinpasst.

3. Randstruktur für einen Fahrzeugsitz nach Anspruch 1 oder 2, wobei das freie Ende (93) mit dem Lastaufnahmeabschnitt (55) gleitend in Kontakt ist, wenn der Winkel relativ zu dem Sitzbankkasten (41) des Sitzes (42) innerhalb eines festgelegten Winkelbereichs ist.

4. Randstruktur für einen Fahrzeugsitz nach einem der Ansprüche 1 bis 3, wobei das freie Ende (93) annähernd halbkugelförmig ausgebildet ist.

5. Randstruktur für einen Fahrzeugsitz nach einem der Ansprüche 1 bis 4, weiterhin Folgendes aufweisend:
eine einsteckseitige Hülse (87), die den Zylinder (84) aufnimmt, und mit dem Zylinder (84) verbunden ist; und
eine aufnahmeseitige Hülse (88), die mit dem anderen Ende der Kolbenstange (86) verbunden ist und die einsteckseitige Hülse (87) zum Vor- und Zurückschieben aufnimmt,
wobei entweder der Zylinder (84) oder die Kolbenstange (86) um eine Achse entweder auf dem Sitzbankkasten (41) oder auf dem Sitz (42) durch die verbundene einsteckseitige Hülse (87) oder die aufnahmeseitige Hülse (88) drehbar gelagert ist und
das freie Ende (93) in der einsteckseitigen Hülse (87) oder der aufnahmeseitigen Hülse (88) ausgebildet ist, die mit dem jeweiligen anderen Bauteil des Zylinders (84) und der Kolbenstange (86) verbunden ist.

6. Randstruktur für einen Fahrzeugsitz nach einem der Ansprüche 1 bis 5, wobei der Sitzbankkasten (41) eine Bodenwand (44) und eine Seitenwand (45), die um die Bodenwand (44) herum steht und eine Kastenform ausbildet, die sich nach oben öffnet, aufweist, und
der Lastaufnahmeabschnitt (55) ein konkaver Abschnitt (61) ist, der in der Seitenwand (45) angeordnet ist, die auf der Vorderseite des Sitzbankkastens (41) angeordnet ist.

7. Randstruktur für einen Fahrzeugsitz nach Anspruch 6, wobei der konkave Abschnitt (61) in der Mitte der Seitenwand (45) in Fahrzeug-Breitenrichtung und nahe am Scharnier (66, 73) angeordnet ist.

8. Anordnung, aufweisend eine Fahrzeugkarosserie (2) eines Motorrads vom Typ eines Motorrollers, eine Federungseinheit (25) und eine Randstruktur für einen Fahrzeugsitz nach einem der Ansprüche 1 bis 7, wobei die Fahrzeugkarosserie (2) ein rechtes und linkes Paar von Fahrzeugkarosserierahmen (14) aufweist, die sich jeweils nach vorne und hinten erstrecken, wobei der Sitzbankkasten (41) zwischen dem rechten und linken Paar der Fahrzeugkarosserierahmen (14) angeordnet ist;
wobei ein oberer Abschnitt der Federungseinheit (25) an mindestens einer voneinander zugewandten Flächen des Paars der Fahrzeugkarosserierahmen (14) angebracht ist und eine Hinterradfederung bildet.

## Revendications

1. Structure périphérique de siège de véhicule comprenant:
une boîte de rangement (41) susceptible d'être fixée à une carrosserie de véhicule (2);
un siège (42) fixé en rotation à une extrémité frontale de la boîte de rangement (41) par une charnière (66), et ouvrant et fermant la boîte de rangement (41); et
un dispositif amortisseur (83) interposé entre la boîte de rangement (41) et le siège (42),
en ce que le dispositif amortisseur (83) comporte:
un vérin (84);
un piston (85) reçu de manière coulissante à l'intérieur du vérin (84);
une tige de piston (86) ayant une extrémité reliée au piston (85) et une autre extrémité en saillie à partir du vérin (84);
en ce que soit le vérin (84) ou la tige de piston (86) est supporté de manière rotative par un axe soit sur la boîte de rangement (41) ou sur le siège (42) autour d'une ligne axiale de rotation d'amortisseur prédéterminée, et
**caractérisée en ce que** le dispositif amortisseur (83) comporte en outre:
un élément de poussée (89) poussant la tige de piston (86) dans une direction faisant saillie à partir du vérin (84),
et
**en ce que** l'un ou l'autre, soit le vérin (84) ou la tige de piston (86) forme une extrémité libre (93), et est en contact par coulissement avec une partie de réception de charge (55) ménagée d'autre part soit dans la boîte de rangement (41) ou dans le siège (42).

2. Structure périphérique de siège de véhicule selon la revendication 1, en ce que la partie de réception de charge (55) comporte une partie concave de réception (61) dans laquelle l'extrémité libre (93) du dispositif amortisseur (83) s'ajuste de manière lâche.

3. Structure périphérique de siège de véhicule selon la revendication 1 ou 2, en ce que l'extrémité libre (93) est en contact par coulissement avec la partie de réception de charge (55) lorsqu'un angle par rapport à la boîte de rangement (41) du siège (42) est donné dans une plage angulaire prédéterminée.

4. Structure périphérique de siège de véhicule selon l'une des revendications 1 à 3, en ce que l'extrémité libre (93) est réalisée approximativement sous forme hémisphérique.

5. Structure périphérique de siège de véhicule selon l'une des revendications 1 à 4, comportant en outre:
un boîtier côté mâle (87) recevant le vérin (84) et raccordé au vérin (84); et
un boîtier côté femelle (88) raccordé à l'autre extrémité de la tige de piston (86) et recevant le boîtier côté mâle (87) pour avancer et reculer,
en ce que soit le vérin (84) ou la tige de piston (86) est supporté de manière rotative par un axe soit sur la boîte de rangement (41) ou sur le siège (42) par le boîtier relié côté maie (87) ou le boîtier côté femelle (88), et
l'extrémité libre (93) est formée dans le boîtier côté mâle (87) ou dans le boîtier côté femelle (88) raccordé d'autre part soit au vérin (84) ou à la tige de piston (86).

6. Structure périphérique de siège de véhicule selon l'une des revendications 1 à 5, en ce que la boîte de rangement (41) comporte une paroi inférieure (44) et une paroi latérale (45) étant autour de la paroi inférieure (44) et constitue une forme de boîte ouvrant vers le haut et,
la partie de réception de charge (55) est une partie concave (61) ménagée dans la paroi latérale (45) disposée sur un côté frontal de la boîte de rangement (41).

7. Structure périphérique de siège de véhicule selon la revendication 6, en ce que la partie concave (61) est ménagée au niveau d'un centre dans une direction de la largeur du véhicule de la paroi latérale (45) et près de la charnière (66, 73).

8. Ensemble comprenant une carrosserie de véhicule (2) d'une motocyclette de type scooter, une unité de suspension (25) et une structure périphérique de siège de véhicule selon l'une des revendications 1 à 7, la carrosserie de véhicule (2) comportant une paire droite et gauche de châssis de carrosserie de véhicule (14) s'étendant respectivement vers l'avant et l'arrière, en ce que
la boîte de rangement (41) est disposée entre la paire droite et gauche de châssis de carrosserie de véhicule (14);
en ce qu'une partie supérieure de l'unité de suspension (25) est fixée au moins à l'une des faces intérieures se faisant face mutuellement de la paire de châssis de carrosserie de véhicule (14) et suspendant une roue arrière.
